# EUROPÄISCHE PATENTANMELDUNG

(11) **EP 1 069 171 A2**
(43) Veröffentlichungstag der Anmeldung: **17.01.2001**
(21) Anmeldenummer: 00810506.6
(22) Anmeldetag: 13.06.2000
(51) Int. Cl.: C09K 5/04

(54) **Kühlmedium für Hochtemperatursupraleiter**

(30) Priorität: 12.07.1999 DE 19932521
(71) Anmelder: ABB RESEARCH LTD., 8050 Zürich (CH)
(72) Erfinder: Chen, Makan, Dr., 5405 Baden-Dättwil (CH); Paul, Willi, Dr., 5430 Wettingen (CH); Lakner, Martin, 5413 Birmenstorf (CH)
(74) Vertreter: ABB Patent Attorneys

(57) **Zusammenfassung**

Beim Betrieb von Bauteilen auf Hochtemperatursupraleiterbasis bei erhöhter Leistung, beispielsweise im Bereich der Energieversorgung, setzen Kühlung und Durchschlagsfestigkeit gewisse Grenzen. Entweder muss der Nominalstrom I_{N} beschränkt werden, um die potentielle Wärmeentwicklung gering zu halten, und/oder die treibende Spannung wird eingeschränkt, um hohen elektrischen Feldstärken vorzubeugen.

Erfindungsgemäss werden in einer Kühlflüssigkeit wie flüssigem Stickstoff kleine Teilchen suspendiert, welche den Wärmeübergang in das Kühlmedium verbessern und zugleich die Dielektrizitätskonstante des Kühlmediums erhöhen.

## Beschreibung

### TECHNISCHES GEBIET

Die Erfindung betrifft ein Kühlmedium zur Kühlung von Hochtemperatursupraleitern gemäss dem Oberbegriff des Patentanspruchs 1. Sie bezieht sich insbesondere auf ein Kühlmedium für den Einsatz von Bauteilen, Komponenten oder Einrichtungen auf Hochtemperatursupraleiterbasis im Bereich der Energieversorgung.

### STAND DER TECHNIK

Anwendungen von Hochtemperatursupraleitern im Energieversorgungssektor, beispielsweise als Übertragungskabel, Transformatoren oder Strombegrenzer im Mittelspannungsbereich, stellen bestimmte Anforderungen an die Kühlung und die elektrische Isolation. Einerseits kommt es in Supraleitern, bei welchen sich die Nominalstromdichte im Bereich der kritischen Stromdichte befindet, zu einem nicht vernachlässigbaren Spannungsabfall und entsprechender Wärmeerzeugung. Andererseits treten bei Wechselstromanwendungen noch Wechselstromverluste im Supraleiter auf, welche ebenfalls und häufig in noch viel stärkerem Masse zu einer Erwärmung des Supraleiters beitragen. Entsprechend darf im Dauerbetrieb der Nominalstrom (I_{N}) eine gewisse Stromstärke nicht überschreiten, damit sich der Supraleiter nicht über seine kritische Temperatur (T_{c}) erwärmt. Die Kühlung des Supraleiters auf seine Betriebstemperatur unterhalb T_{c} geschieht am einfachsten durch Eintauchen des Supraleiters in eine Kühlflüssigkeit wie flüssigen Stickstoff, flüssiges Helium, flüssiges Neon oder flüssige Stickstoff-Sauerstoff-Gemische, welche sich in einem speziellen, Kryostaten genannten Behälter befindet.

Weiter muss ein Supraleiter, welcher sich auf einem elektrischen Potential von weit über 100kV befinden kann, auch gegenüber dem Kryostaten elektrisch isoliert werden. Insbesondere im Bereich von Spitzen oder Kanten treten Feldüberhöhungen, d.h. inhomogene Verteilungen des elektrischen Feldes, auf. Die Anwesenheit eines Kühlmediums beziehungsweise die Abwesenheit einer Luft- oder Gasisolation macht sich durch eine verminderte elektrische Durchschlagsfestigkeit bemerkbar. Letztere beträgt in reinem LN2 in grossen Volumen bescheidene 10kV/mm, und bei siedendem Stickstoff unter Blasenbildung noch weniger. Entsprechend muss die maximal auftretende Spannung begrenzt bleiben respektive bei der Auslegung eines supraleitenden Bauteiles auf die Vermeidung von durchschlagsgefährdeten Stellen geachtet werden.

Bei Strombegrenzern auf Supraleiterbasis akzentuieren sich die genannten Probleme noch. Im Begrenzungsfall, wenn ein Fehler- oder Überstrom grösser als der kritische Strom Ic durch den Supraleiter fliesst, tritt der Supraleiter in den resistiven Zustand über. Entsprechend wird noch mehr Wärme dissipiert, welche durch das Kühlmedium abgeführt werden muss. Da im Begrenzungsfall die treibende Spannung grösstenteils über dem Supraleiter abfällt, besteht auch die Gefahr eines elektrischen Durchschlags zwischen einzelnen Abschnitten des Supraleiters, welche sich nicht auf dem gleichen Potential befinden.

Der Wärmeübergang von der Hochtemperatursupraleiteranordnung, welche neben dem eigentlichen Supraleiter noch normalleitende Nebenschlusswiderstände und/oder isolierende Schichten umfassen kann, in das flüssige Kühlmedium ist ein entscheidender Punkt. Ist der Temperaturunterschied zwischen der Supraleiteranordnung und der Kühlflüssigkeit (z.B. 77K für LN₂) zu gross, befindet man sich im Filmsiede-Bereich der Kühlflüssigkeit. Im Falle der Verwendung von flüssigem Stickstoff (LN₂) bildet sich ein durchgehender Film aus gasförmigem Stickstoff an der Oberfläche der zu kühlenden Struktur aus. Dies hat einen relativ schlechten Wärmeübergang zur Folge und bedeutet einerseits eine verlangsamte Abkühlung des in das Kühlmittel eingetauchten Objekts oder andererseits schlimmstenfalls eine weitere Temperaturerhöhung desselben, falls es selbst Wärme produziert. Im Gegensatz dazu ist ein erhöhter Wärmeübergang im Blasensiede-Bereich zu erwarten, welcher sich zumindest bei einem geringeren Temperaturgradienten zwischen Kühlflüssigkeit und zu kühlendem Objekt ausbildet. Der entsprechende Temperaturverlauf einer Proben unter konstanter Wärmeaufnahme ist beispielsweise im Artikel "Transient heat transfer from smooth surfaces into liquid nitrogen", V. Drach und J. Fricke, Cryogenics Band 36 (1996), Seiten 263-269, zu finden.

### DARSTELLUNG DER ERFINDUNG

Der Erfindung liegt die Aufgabe zugrunde, ein Kühlmedium für Hochtemperatursupraleiter zu schaffen, welches die Wirschaftlichkeit ihres Einsatzes, insbesondere im Bereich der Energieversorgung bei mittleren und hohen Leistungen, verbessert.

Die Aufgabe wird gelöst durch ein Kühlmedium für Hochtemperatursupraleiter mit den Merkmalen des Patentanspruchs 1.

Kern der Erfindung ist die Erkenntnis, dass neben der Ausgestaltung des Supraleiters selbst auch das ihn umgebende Kühlmedium die Wirtschaftlichkeit seiner Anwendung beeinflusst. Durch einfache Modifikationen einer bekannten Kühlflüssigkeit lassen sich Einsparungen in der Auslegung und im Design von Hochtemperatursupraleiteranordnungen erzielen.

Die erfindungsgemäss an das Kühlmedium gerichteten Anforderungen umfassen beispielsweise einen Schutz des Supraleiters vor thermischer Überbelastung sowie vor elektrischen Durchbrüchen zwischen verschiedenen Abschnitten eines Supraleiters oder zwischen dem Supraleiter und einem das Kühlmedium enthaltenden Kryostaten. Dazu werden in einer Kühlflüssigkeit kleine Teilchen dispergiert oder suspendiert, d.h. in einem schwebenden Zustand fein verteilt.

Gemäss einer ersten bevorzugten Ausführungsform wirken die dispergierten Teilchen als Kondensationskeime für die Kühlflüssigkeit, wodurch der Übergang vom Blasen- in den Filmsiedebereich hinausgezögert werden kann. In die Dispersion eingetauchte Bauteile sind also besser vor übermässiger Erwärmung geschützt und können bei höheren Nennströmen betrieben werden.

Gemäss einer weiteren Ausführungsform weisen die suspendierten Teilchen eine Dielektrizitätskonstante auf, welche höher ist als diejenige der Kühlflüssigkeit. Ein Kühlmedium basierend auf einer Kühlflüssigkeit mit dergestalt modifizierten Eigenschaften schützt ein Bauteil vor elektrischen Durchbrüchen und erlaubt einen Betrieb bei höheren Spannungen.

Vorzugsweise wird als Kühlflüssigkeit flüssiger Stickstoff LN2 verwendet.

### KURZE BESCHREIBUNG DER FIGUREN

Nachfolgend wird die Erfindung anhand von Ausführungsbeispielen im Zusammenhang mit der Zeichnung näher erläutert. Die verwendeten Bezugszeichen sind in der Bezugszeichenliste zusammengefasst.

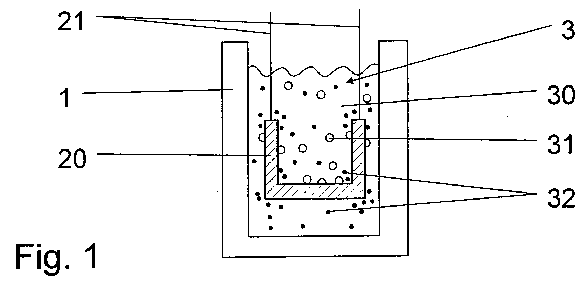

In Fig.1 ist ein Kryostat mit einem Kühlmedium für Hochtemperatursupraleiter nach der Erfindung dargestellt.

### WEGE ZUR AUSFÜHRUNG DER ERFINDUNG

Fig.1 zeigt einen Kryostaten 1, welcher mit einer Kühlflüssigkeit 30 gefüllt ist und welcher letztere von der Umgebung thermisch isoliert. In die Kühlflüssigkeit 30 ist eine Hochtemperatursupraleiteranordnung 20 eingetaucht, welche über normalleitende Anschlussleiter 21 in einen Stromkreis geschaltet ist. In der Kühlflüssigkeit 30 sind kleine Teilchen 32 dispergiert, welche in der Kühlflüssigkeit 30 schweben und mit letzterer zusammen das erfindungsgemässe Kühlmedium 3 in Form einer Suspension oder Dispersion bilden. Verdampfende Kühlflüssigkeit 30 bildet aufsteigende Blasen 31. Nicht gezeigt in Fig.1 ist ein Deckel zum Abschluss des Kryostaten 1 sowie allfällige Durchführungen der Anschlussleiter 21 durch den Kryostaten. Die Hochtemperatursupraleiteranordnung 20 ist beispielsweise Teil eines Transformators, eines Strombegrenzers oder eines sonstigen Bauteils aus dem Bereich der Energieübertragung.

Die dispergierten Teilchen 32 fungieren als Kondensationskeime (nucleation centers) und verzögern die Ausbildung eines kontinuierlichen Films aus verdampfter Kühlflüssigkeit 31 an der Oberfläche des zu kühlenden Objektes 20. Das Blasensieden mit seinen gegenüber dem Filmsieden besseren Wärmeübergangseigenschaften wird also auch bei einem grösseren Temperaturgradienten noch vorherrschen. Durch die verbesserte Kühlleistung ist es möglich, den Supraleiter 20 mit einem höheren Nennstrom zu belasten.

Das erfindungsgemässe Kühlmedium 3 dient auch einer Erhöhung der elektrischen Durchschlagsfestigkeit. Ein elektrischer Durchbruch ist an der Stelle mit der höchsten elektrischen Feldstärke zu erwarten. Insbesondere dort, wo der Leiter Spitzen, Ecken oder Kanten formt, treten sogenannte Feldüberhöhungen auf. Dielektrika mit hoher Dielektrizitätskonstante ε haben im Allgemeinen eine höhere Durchschlagsfestigkeit. Um zu vermeiden, dass zwischen dem Supraleiter 20 und dem Kryostaten 1 oder zwischen Abschnitten des Supraleiters, welche sich möglicherweise auf verschiedenem Potential befinden, unverhältnismässig grosse Abstände vorgesehen werden müssen, sind der Kühlflüssigkeit 30 Teilchen 32 mit einer Dielektrizitätskonstanten ε, welche höher ist als diejenige der Kühlflüssigkeit 30 (z.B. ε(LN₂) = 1.45) beigemischt. Dies führt zu einer Erhöhung der Dielektrizitätskonstanten des Kühlmediums 3 und zu einer verbesserten Abschirmung des elektrischen Feldes.

Zudem wird die gewünschte Abschirmung durch den dielektrophoretischen Effekt begünstigt. Auf Teilchen mit erhöhter Dielektrizitätskonstanten in einem weniger stark polarisierbaren Fluid wirkt im inhomogenen elektrischen Feld eine Kraft, welche die Teilchen in Gebiete mit höherer absoluter Feldstärke zieht. Demzufolge werden sich die Teilchen bei den erwähnten potentiell gefährdeten Stellen ansammeln und dort die Abschirmung noch vestärken. Dieser Effekt dient auch der oben angesprochenen verbesserten Kühlung, da beispielsweise bei einer Ecke des Leiters die Stromverteilung inhomogen und entsprechend die Verluste erhöht sind.

Vorzugsweise bestehen die als Additivum zur Kühlflüssigkeit 30 beigegebenen Teilchen 32 aus keramischen Materialien wie SiO₂, Al₂O₃, SrTiO₃, BaSrO₃, TiO₂, SiC, ZnO und/oder aus Stoffen, welche nur bei der Temperatur des Kühlmittels (77K für LN₂) im festen Zustand vorliegen, wie beispielsweise H₂O, CO₂, Ar, Methan oder Ethylen. Die Dielektrizitätskonstanten betragen für Letztere 1.5 (Ar) bis 2.2 (H₂O) und für die keramischen Materialien bis zu 1000 (SrTiO₃) oder mehr. Eine gewisse Rauhigkeit der Teilchenoberfläche ist von Vorteil. Die Teilchengrösse ist vorzugsweise so gross, dass Agglomerationen verhindert sind. Typische lineare Ausdehnungen liegen zwischen 1 und 100 µm. Die spezifische Dichte der suspendierten Teilchen liegt vorzugsweise im Bereich der Dichte der Kühlflüssigkeit. Letztere beträgt beispielsweise 0.8 g/cm³ für LN₂ und immerhin 1.2 g/cm³ für flüssigen Sauerstoff. In einer anderen Ausführungsform sind Mittel zur Verhinderung einer Sedimentation der Teilchen vorgesehen. Derartige Mittel umfassen beispielsweise eine Pumpe oder ein im Kryostat angeordnetes Rührwerk. Die Teilchendichte beträgt vorzugsweise weniger als 2 Volumenprozent.

### Beispiele:

Ein Stahlstreifen von 2 cm Breite und 500 µm Dicke, auf einer Seite mit einem Lack beschichtet und auf der anderen Seite mit einer 1 mm dicken Glasfaserepoxyschicht versehen wurde in flüssigen Stickstoff eingetaucht und an eine Stromquelle angeschlossen. Bis zu einer Stromstärke von 160 A stellte sich ein stabiler Zustand ein, d.h. die erzeugte Wärme konnte durch das Kühlmedium abgeführt werden und der Spannungsabfall blieb konstant.

Daraufhin wurde ein Al₂O₃ - Pulver mit einer mittleren Teilchengrösse von 10 µm in den flüssigen Stickstoff eingerührt (2Vol%) und das Experiment wiederholt. Diesmal konnte ein thermisch stabiler Zustand bis zu einer Stromstärke von 200 A etabliert werden. Dies entspricht einer Erhöhung der Kühlleistung um 56%!

Durchschlagstests gemäss IEEE standard 1.2/50 µs (IEC-60) wurden in flüssigem Stickstoff durchgeführt. Nach Zugabe von kleinen Teilchen in Form von Schneeflocken und Eiskristallen erhöhte sich die Durchschlagsspannung um 35% im Vergleich zu reinem Stickstoff.

Insgesamt ergibt sich unter Verwendung eines erfindungsgemässen Kühlmediums die Möglichkeit, die Wirtschaftlichkeit des Einsatzes von Bauteilen auf Supraleiterbasis zu verbessern.

Insbesondere können beim Übergang zu höheren Leistungen die zunehmenden Anforderungen an Kühlung und Durchschlagsfestigkeit zumindest teilweise dem Kühlmedium übertragen werden, was bei der Konzeption des Bauteils selbst zu Einsparungen führt.

### BEZUGSZEICHENLISTE

- 1: Kryostat
- 20: Hochtemperatursupraleiter
- 21: Anschlussleiter
- 3: Kühlmedium
- 30: Kühlflüssigkeit
- 31: Verdampfte Kühlflüssigkeit
- 32: suspendierte oder dispergierte Teilchen

## Patentansprüche

1. Kühlmedium zur Kühlung von Hochtemperatursupraleitern (2) mit einer Kühlflüssigkeit (30), dadurch gekennzeichnet, dass in der Kühlflüssigkeit (30) kleine Teilchen (32) dispergiert respektive suspendiert sind.

2. Kühlmedium nach Anspruch 1, dadurch gekennzeichnet, dass die kleinen Teilchen (32) Kondensationskeime für die Kühlflüssigkeit (30) sind.

3. Kühlmedium nach Anspruch 1, dadurch gekennzeichnet, dass die Teilchen (32) eine gegenüber der Kühlflüssigkeit (30) erhöhte Dielektrizitätskonstante aufweisen.

4. Kühlmedium nach Anspruch 2 oder 3, dadurch gekennzeichnet, dass die Teilchen (32) eine lineare Ausdehnung im Bereich von 1-100 µm haben.

5. Kühlmedium nach Anspruch 2 oder 3, dadurch gekennzeichnet, dass das Gesamtvolumen der Teilchen (32) weniger als 2% des Volumens der Kühlflüssigkeit (30) ausmacht.

6. Kühlmedium nach Anspruch 2 oder 3, dadurch gekennzeichnet, dass die Teilchen aus SiO₂, Al₂O₃, SrTiO₃, BaSrO₃, TiO₂, SiC, ZnO oder gefrorenem H₂O, CO₂, Ar oder Mischungen davon bestehen.

7. Kühlmedium nach Anspruch 2 oder 3, dadurch gekennzeichnet, dass die Kühlflüssigkeit (30) aus flüssigem Stickstoff (LN₂) besteht.

8. Kühlmedium nach Anspruch 2 oder 3, dadurch gekennzeichnet, dass die spezifische Dichte der Teilchen (32) und der Kühlflüssigkeit (30) mindestens annähernd gleich gross sind.

9. Kühlmedium nach Anspruch 2 oder 3, dadurch gekennzeichnet, dass Mittel zur Verhinderung einer Sedimentation der Teilchen (32) vorgesehen sind.
